# DEMANDE DE BREVET EUROPEEN

(11) **EP 1 669 242 A1**
(43) Date de publication de la demande: **14.06.2006**
(21) Numéro de dépôt: 05292654.0
(22) Date de dépôt: 13.12.2005
(51) Int. Cl.: B60Q 1/04

(54) **Armature d'un bord supérieur d'une piéce de carrosserie adjacente à un capot**

(30) Priorité: 13.12.2004 FR 0413230
(71) Demandeur: COMPAGNIE PLASTIC OMNIUM, 69007 Lyon (FR)
(72) Inventeur: Andre, Gérald, 01500 Amberieu en Bugey (FR); Delavalle, Dominique, 01160 Pont d'Ain (FR); Cheron, Hugues, 01800 Meximieux (FR)
(74) Mandataire: Remy, Vincent Noel Paul

(57) **Abrégé**

L'invention concerne une armature (1) destinée à être fixée sur une pièce de structure (2) d'un véhicule et constituant un support d'un bord supérieur d'une pièce de carrosserie (3) adjacente à un capot (5), caractérisée en ce qu'elle est déformable et en ce qu'elle est munie d'un joint (4) contre lequel le capot vient s'appuyer en position fermée.

## Description

### Domaine technique.

Avant d'un véhicule automobile avec gestion des jeux et affleurements entre le capot et les pièces de carrosserie environnantes.

### Etat de la technique.

Actuellement, la géométrie autour du capot moteur peut être réalisée de différentes façons, selon l'ordre de montage des pièces sur véhicule :
- Les ailes peuvent être montées préalablement. Dans ce cas, elles sont positionnées par un système pilote dans une position latérale et verticale proche de leur position théorique. Le capot est alors centré par un moyen entre les deux ailes, afin de répartir les jeux.
- Dans une configuration plus fréquente, le capot est présent dès le passage en cataphorèse sur la caisse en blanc. Les ailes sont ensuite montées en contact avec celui-ci à l'aide de cales de jeu.

Dans tous les cas, la peau de pare-chocs est montée ultérieurement et prend ses références sur la face avant. Celle-ci peut être, selon les cas, référencée sur les doublures d'aile par des solutions produits, ou bien par rapport à des points théoriques à l'aide d'un moyen spécifique.

### Problème posé par cet état de la technique.

Les solutions utilisées par les constructeurs permettent de générer des jeux de bonne qualité avec les ailes. Cependant, au cours de la vie du véhicule, ce jeu est fortement dépendant de la tenue des composants. Ainsi, pour le cas des ailes en thermoplastique, le fluage sur les fixations, l'expansion thermique de l'aile, dégradent la valeur et la constance du jeu.

En outre, la chaîne est longue entre l'arrête du capot et celle de l'aile. Qui plus est, cet affleurement n'est pas constant sur la longueur car, à l'autre extrémité du capot, c'est la charnière qui définit la position.

De même, rien n'est prévu pour assurer une mise en référence directe entre le capot et le bord supérieur de la peau de pare-chocs.

En effet, l'affleurement vertical entre capot et peau de pare-chocs dépend de la position verticale du capot. Il est donc tributaire des butées caoutchouc et de la serrure, elles-mêmes référencées sur la face avant.

Enfin, les systèmes passifs de traitement du choc piéton ont tendance à éloigner les points de fixation de l'aile et du pare-choc, et donc à assouplir la raideur de l'arrête visible des pièces, particulièrement :
- verticalement pour la peau de pare-chocs du fait du choc hanche,
- latéralement pour l'aile, car le traitement du choc tête se fait par des pièces verticales qui flambent sous l'effort. Celles-ci sont ainsi particulièrement souples latéralement.

Ainsi, les problèmes posés sont amplifiés par le traitement passif du choc piéton.

### Solution proposée par l'invention.

L'invention vise à fournir un système de mise en référence directe entre le capot et ses pièces de carrosserie environnantes, principalement la peau de pare-chocs et les ailes.

Ce système consiste en une armature déformable, support d'un bord supérieur d'une pièce de carrosserie adjacente au capot, munie d'un joint contre lequel le capot vient s'appuyer en position fermée. Cette armature se fixe sur une pièce de structure du véhicule mais permet au bord de la pièce de carrosserie adjacente au capot de se positionner directement par rapport au capot lui-même.

Pour l'accostage avec la peau de pare-choc, l'invention permet de réduire le jeu vertical entre les deux pièces.

Pour l'accostage avec les ailes, le jeu peut être réduit par l'utilisation d'un système de positionnement de la partie supérieure de l'aile par le capot. Celui-ci permet une mise en contrainte latérale de l'aile contre le capot, en position fermée, et comporte aussi des butées selon l'axe vertical afin de minimiser les défauts d'affleurement.

Le capot est, dans tous les cas, considéré comme la pièce la plus rigide qui déforme les autres pièces.

Ainsi, dans tous les cas, on utilise la flexibilité de la peau de pare-chocs et de l'aile, tirant ainsi avantage de leur traitement passif.

### Modes de réalisation particuliers.

- l'armature est divisée en deux parties : une réglette portant le joint, qui prend appui contre la pièce de carrosserie, et une base qui supporte la pièce de carrosserie.
- le joint s'étend continûment sur presque toute la longueur du bord de la pièce de carrosserie.
- la pièce de carrosserie est une peau de pare-chocs.
- la pièce de carrosserie est un vitrage d'optique, ce qui constitue une interprétation extensive de la notion de pièce de carrosserie, mais demeure conforme à l'invention dans la mesure où le vitrage d'optique est affleurant et doit être mis en référence avec le capot, et/ou l'aile voisine.
- la pièce de carrosserie est une aile avant.

### Description d'un exemple.

Afin de mieux faire comprendre l'invention, on va maintenant en décrire un exemple de réalisation non limitatif de la portée de l'invention, en référence aux figures annexées :

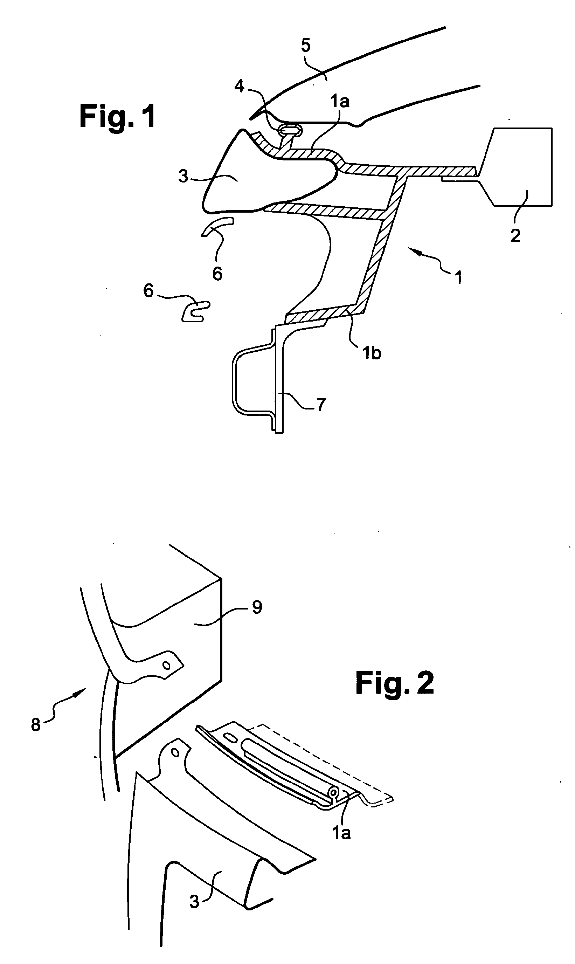

- la figure 1 est une section de la partie supérieure d'un avant de véhicule automobile,
- la figure 2 est une vue en perspective éclatée d'une extrémité supérieure de peau de pare-chocs, d'un bloc optique et d'une réglette selon l'invention.

**Vocabulaire**

| Des revendications | de l'exemple | référence sur les dessins |
|---|---|---|
| Armature déformable | Armature | 1 |
| Réglette | Réglette | 1a |
| Base | Base | 1b |
| Pièce de structure | Face avant technique | 2 |
| Pièce de carrosserie adjacente | Peau de pare-chocs | 3 |
| Joint | Joint | 4 |
| Capot | Capot | 5 |
| | Grille | 6 |
| | Poutre de chocs | 7 |
| Pièce de carrosserie adjacente | Vitrage d'optique | 8 |
| | Boîtier d'optique | 9 |

**Détail des exemples**

| Référence | Explication |
|---|---|
| 1, 1a, 1b | L'armature peut être divisée en deux parties : - la réglette 1 a qui supporte le joint 4 et reporte l'appui sur le bord supérieur de la peau de pare-chocs 3, - la base 1 b qui se fixe sur la face avant technique et supporte la partie supérieure de la peau de pare-chocs. La base 1 b est déformable pour suivre les déplacements verticaux de la réglette, déplacée vers le bas par le capot lors de sa fermeture. |
| 8 | Le vitrage d'optique peut avoir aussi à suivre les déplacements vers le bas du capot si, comme sur la figure 2, il se trouve à affleurement avec le capot. |

Bien que non représenté, un dispositif équivalent peut être prévu entre le capot et les ailes avant. Le principe préféré est un système composé d'une butée en matériau amortissant permettant d'assurer :
- Un contact vertical avec le capot générant une contrainte sur l'aile.
- Un centrage latéral de telle sorte que le capot déforme l'aile sur son support relativement flexible de façon à lui imposer une position latérale locale.

## Revendications

1. Armature (1) destinée à être fixée sur une pièce de structure (2) d'un véhicule et constituant un support d'un bord supérieur d'une pièce de carrosserie (3) adjacente à un capot (5), **caractérisée en ce qu'**elle est déformable et **en ce qu'**elle est munie d'un joint (4) contre lequel le capot vient s'appuyer en position fermée.

2. Armature selon la revendication 1, divisée en deux parties : une réglette (1a) portant le joint (4), qui prend appui contre la pièce de carrosserie, et une base (1 b) qui supporte la pièce de carrosserie (3).

3. Armature selon l'une quelconque des revendications 1 et 2, dans laquelle le joint (4) s'étend continûment sur presque toute la longueur du bord de la pièce de carrosserie (3).

4. Armature selon l'une quelconque des revendications 1 à 3, dans laquelle la pièce de carrosserie est une peau de pare-chocs (3).

5. Armature selon l'une quelconque des revendications 1 à 3, dans laquelle la pièce de carrosserie est un vitrage d'optique (8).

6. Armature selon l'une quelconque des revendications 1 à 3, dans laquelle la pièce de carrosserie est une aile avant.
